# EUROPÄISCHE PATENTANMELDUNG

(11) **EP 0 878 365 A2**
(43) Veröffentlichungstag der Anmeldung: **18.11.1998**
(21) Anmeldenummer: 98107509.6
(22) Anmeldetag: 24.04.1998
(51) Int. Cl.: B60R 22/28, B60R 22/34, B60R 21/13

(54) **Gurtaufroller mit integriertem Kraftbegrenzer**

(30) Priorität: 13.05.1997 DE 29708493 U
(71) Anmelder: TRW Occupant Restraint Systems GmbH & Co. KG, 73551 Alfdorf (DE)
(72) Erfinder: Ludwig, Thomas, 82327 Tutzing (DE)
(74) Vertreter: Degwert, Hartmut, Dipl.-Phys.

(57) **Zusammenfassung**

Ein Gurtaufroller weist eine in einem Rahmen drehbar gelagerte Gurtspule und einen integrierten Kraftbegrenzer auf, der ein mit einem Ende an der Gurtspule angeschlossenes Metallband und ein relativ zur Gurtspule drehbar gelagertes Steuerteil aufweist, das durch einen Blockiermechanismus am Rahmen drehfest blockierbar ist und an dem das andere Ende des Metallbandes angeschlossen ist, wobei das Metallband bei Überschreitung einer bestimmten Zugspannung im Gurtband durch eine mit dem Steuerteil drehfeste Schikane gezogen und dabei plastisch deformiert wird. Um das Niveau der Zugspannung, bei dessen Überschreitung die Deformation des Metallbandes eintritt und somit die Kraftbegrenzung wirksam wird, einstellbar zu machen, weist die Schikane wenigstens ein selektiv verstellbares Umlenkelement auf, durch dessen Stellung die Höhe der bestimmten Zugspannung einstellbar ist.

## Beschreibung

Die Erfindung betrifft einen Gurtaufroller mit einer in einem Rahmen drehbar gelagerten Gurtspule und einem integrierten Kraftbegrenzer.

Aus der US-PS 5 618 006 ist bereits ein Gurtaufroller mit einem integrierten Kraftbegrenzer bekannt, der ein mit einem Ende an der Gurtspule angeschlossenes Metallband und ein relativ zur Gurtspule drehbar gelagertes Steuerteil aufweist. Das Steuerteil ist fahrzeugsensitiv durch einen Blockiermechanismus am Rahmen drehfest blockierbar. An dem Steuerteil ist ferner das andere Ende des Metallbandes angeschlossen, welches auf den Außenumfang des Steuerteils aufgewickelt ist. Bei aktiviertem Blockiermechanismus und Überschreitung einer bestimmten Zugspannung im Gurtband wird das Metallband durch eine mit dem Steuerteil drehfeste Schikane gezogen und dabei plastisch deformiert.

Durch die Erfindung wird bei einem Gurtaufroller dieser Bauart das Niveau der Zugspannung, bei dessen Überschreitung die Deformation des Metallbandes eintritt und somit die Kraftbegrenzung wirksam wird, einstellbar gemacht. Dies wird erfindungsgemäß dadurch erreicht, daß die Schikane wenigstens ein selektiv verstellbares Umlenkelement aufweist, durch dessen Stellung die Höhe der bestimmten Zugspannung einstellbar ist. Da sich das Umlenkelement im normalen Betrieb mit dem Steuerteil und somit der Gurtspule dreht, ist seine Verstellung, insbesondere Verschwenkung, nicht ohne weiteres möglich. In Weiterbildung der Erfindung ist aber vorgesehen, daß zur Verstellung des Umlenkelementes ein relativ zu dem Steuerteil verdrehbares Stellteil verwendet wird. Dieses dreht sich im Normalbetrieb mit dem Steuerteil und wird im Bedarfsfalle durch eine Hilfskraft relativ zu dem Steuerteil zwangsverdreht. Durch diese Relativdrehung zwischen Steuerteil und Stellteil wird das Umlenkelement an dem Steuerteil verschwenkt. Diese Zwangsverschwenkung erfolgt vorzugsweise durch eine zwischen Steuerteil und Stellteil vorhandene Steuerkurve/Kurvenfolger-Kombination. Die Hilfskraft zur Zwangsverdrehung des Stellteils wird bei der bevorzugten Ausführungsform durch einen pyrotechnischen Stellantrieb bereitgestellt.

Je nach Stellung des Umlenkelementes an dem Steuerteil ist eine mehr oder weniger große Kraft erforderlich, um das Metallband durch die Schikane zu ziehen, da das Metallband mehr oder weniger stark umgelenkt und somit deformiert wird. Die Verstellung des Umlenkelementes kann durch einen Sensor ausgelöst werden, der ein für das Gewicht oder die Größe des Fahrzeuginsassen repräsentatives Signal abgibt. Durch dieses Signal kann der pyrotechnische Stellantrieb ausgelöst werden. Auf diese Weise ist eine Anpassung der Kraftbegrenzungs-Kennlinie an die Masse eines Fahrzeuginsassen möglich.

Gegenstand der Erfindung ist ferner ein Gurtaufroller der eingangs angegebenen Art mit der Besonderheit, daß durch Relativdrehung zwischen Steuerteil und Gurtspule ein Schaltelement aktiviert wird, das im Anschluß durch eine durch plastische Deformierung des Metallbandes erfolgte Kraftbegrenzung einen Sperrmechanismus aktiviert, der weiteren Gurtbandabzug von der Gurtspule verhindert. Dieser Sperrmechanismus ist bei der bevorzugten Ausführungsform als Gurtbandklemme ausgebildet. Als Schaltelement kann in besonders einfacher Weise ein bezüglich der Gurtspule axial verschiebbares Teil, insbesondere ein Stift, verwendet werden, dessen Verschiebung durch eine zwischen Steuerteil und Gurtspule gebildete Steuerkurve/Kurvenfolger-Kombination bestimmt wird.

Einzelheiten der Erfindung ergeben sich aus der beigefügten Zeichnung, die wie folgt kurz erläutert wird:

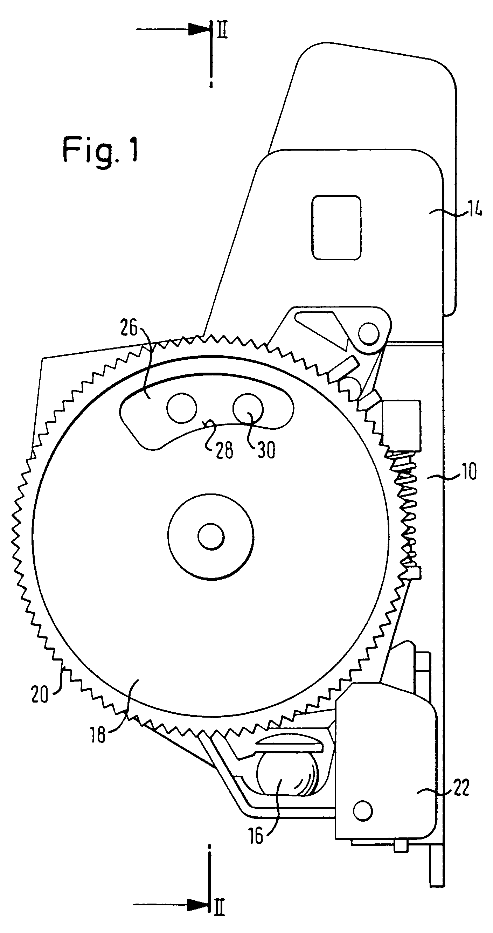

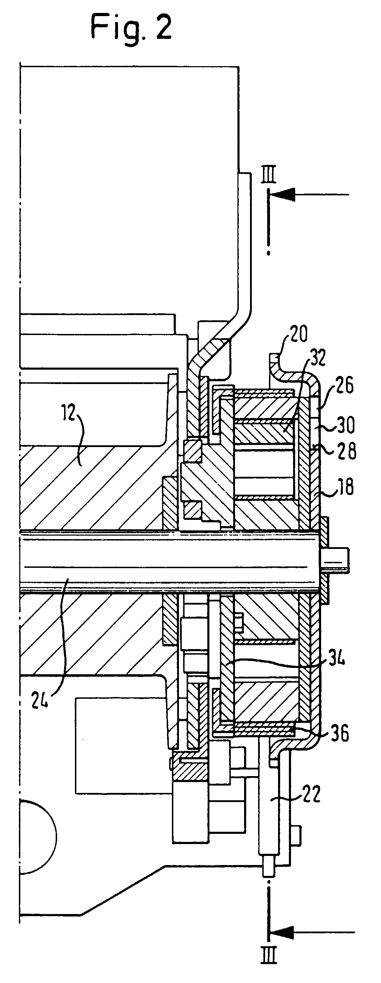

Fig. 1 zeigt eine Seitenansicht des Gurtaufrollers mit integrierter Kraftbegrenzung und mit einem Sperrmechanismus, der als Gurtbandklemme ausgebildet ist. Man sieht in Fig. 1 einen lasttragenden Rahmen 10, in dem eine Gurtspule 12 (Fig. 2) drehbar gelagert ist, eine Gurtband-Klemme 14, einen fahrzeugsensitiven Sensor 16, eine Stellscheibe 18 mit Außenverzahnung 20 und einen pyrotechnischen Stellantrieb 22.
Fig. 2 ist ein Schnitt entlang Linie II-II in Fig. 1. Die Stellscheibe 18 sitzt auf dem äußeren Ende einer Achse 24 der Gurtspule 12 und weist einen Ausschnitt 26 mit einer Steuerkurve 28 auf. Mit der Steuerkurve 28 wirkt ein Zapfen 30 zusammen, der an einem Umlenkelement 32 angeschlossen ist. Das Umlenkelement 32 ist schwenkbar an einer Steuerscheibe 34 gelagert. Auf den Außenumfang der Steuerscheibe 34 ist ein Metallband 36 in mehreren Windungen aufgewickelt. Das Metallband 36 läuft vom Außenumfang der Steuerscheibe 34 über eine Schikane, die zwischen dem Umlenkelement 32 und einem Nocken an der Sternerseheibe 34 gebildet ist.

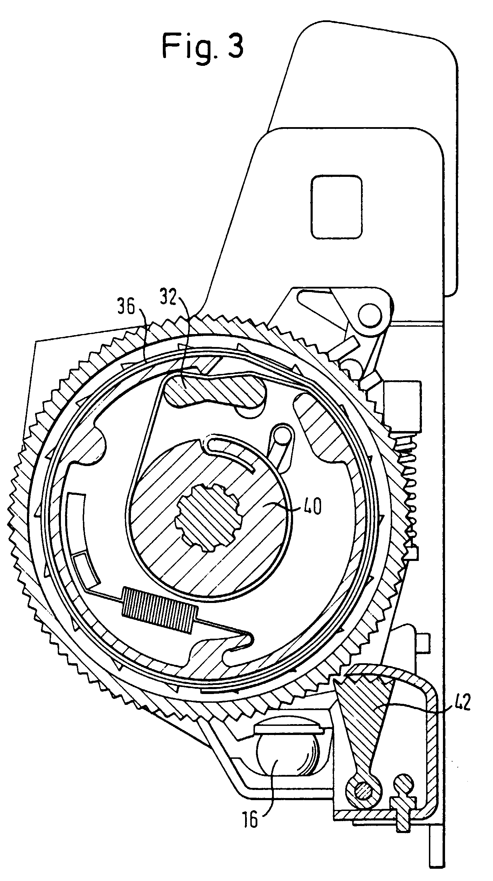

Fig. 3 ist ein Schnitt entlang Linie III-III in Fig. 2. Sie zeigt den Verlauf des Metallbandes 36 durch die Schikane und dann zu einem drehfest auf der Achse 24 sitzenden zylindrischen Kern 40, an dem das innere Ende des Metallbandes 36 befestigt ist. Ferner zeigt Fig. 3 ein verschwenkbares Ritzelsegment 42, das bei Aktivierung des pyrotechnisehen Stellantriebs 22 in die Verzahnung 20 eingesteuert wird und so eine Zwangsverdrehung der Stellscheibe 18 relativ zur Steuerscheibe 34 bewirkt. Durch diese Zwangsverdrehung wird der Zapfen 30 entsprechend einer radialen Komponente der Steuerkurve 28 freigegeben, wodurch das Umlenkelement 32 verschwenkt wird.

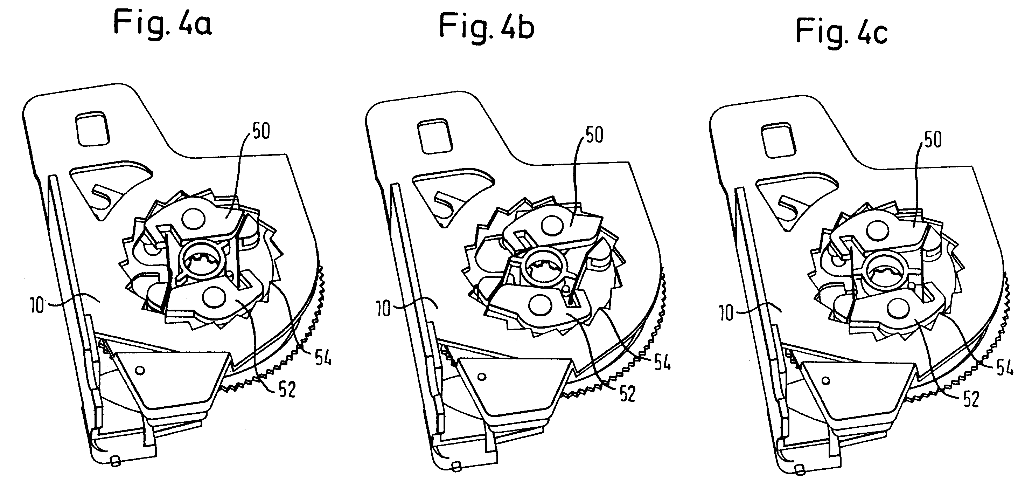

Die Figuren 4a, 4b und 4c zeigen einen Blockiermechanismus mit zwei auf Drehbeschleunigung ansprechenden Blockierklinken 50, 52, die mit einer Blockierverzahnung 54 am Rahmen 10 zusammenwirken. Die Klinken 50, 52 sind an der Steuerscheibe 34 schwenkbar gelagert. Fig. 4a zeigt den Normalbetrieb und Fig. 4b den Blockierzustand, bei dem über die Klinken 50 bzw. 52 die Last in den Rahmen 10 eingeleitet wird. Fig. 4c zeigt den Zustand nach erfolgter Kraftbegrenzung. Nach erfolgter Kraftbegrenzung ist ein mit der Gurtspule gekoppelter und mit zwei radialen Vorsprüngen verschener Ring relativ zur Steuerscheibe 34 verdreht. Die radialen Vorsprünge des Rings liegen dadurch an den die Blockierklinken 50, 52 beaufschlagenden Federn an, so daß deren freie Lange verkürzt und deren auf die Blockierklinken 50, 52 wirkende Federkraft erhöht ist. Nach erfolgter Kraftbegrenzung wird ein Gurtbandabzug von der Gurtspule damit nicht mehr durch Einsteuern der Blockierklinken 50, 52, sondern durch die Gurtbandklemme 14 bewirkt.

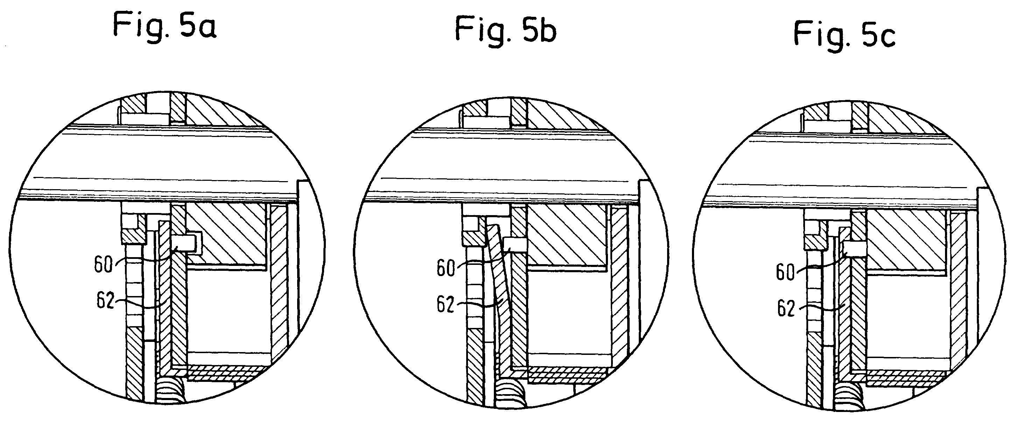

Die Figuren 5a, 5b und 5c zeigen einen Schaltmechanismus, der den Gurtaufroller im Verlauf der Kraftbegrenzung in einen Bereitschaftszustand zur Aktivierung der Gurtband-Klemme umschaltet. Die Umschaltung erfolgt durch einen axial verschiebbaren Stift 60, der bei Relativdrehung zwischen Gurtspule und Steuerscheibe 34 durch eine Rampe im zylindrischen Kern 40 axial nach außen gedrückt wird, woraufhin durch weitere Drehung eine elastisch auslenkbare Zunge 62 hinter diesen Stift 60 schnappt. Die Aktivierung der Gurtband-Klemme 14 erfolgt dann mittels eines Einsteuerhebels, der durch den fahrzeugsensitiven Sensor 16 aktiviert wird, indem dessen Klinke in der Steuerverzahnung am Außenumfang der Steuerscheibe 34 einrastet.

## Patentansprüche

1. Gurtaufroller mit einer in einem Rahmen (10) drehbar gelagerten Gurtspule (12) und einem integrierten Kraftbegrenzer, der ein mit einem Ende an der Gurtspule (12) angeschlossenes Metallband (36) und ein relativ zur Gurtspule (12) drehbar gelagertes Steuerteil (34) aufweist, das durch einen Blockiermechanismus am Rahmen (10) drehfest blockierbar ist und an dem das andere Ende des Metallbandes (36) angeschlossen ist, wobei das Metallband (36) bei Überschreitung einer bestimmten Zugspannung im Gurtband durch eine mit dem Steuerteil (34) drehfeste Schikane gezogen und dabei plastisch deformiert wird, dadurch gekennzeichnet, daß die Schikane wenigstens ein selektiv verstellbares Umlenkelement (32) aufweist, durch dessen Stellung die Höhe der bestimmten Zugspannung einstellbar ist.

2. Gurtaufroller nach Anspruch 1, dadurch gekennzeichnet, daß zur Verstellung des Umlenkelements (32) ein relativ zu dem Steuerteil (34) verdrehbares Stellteil (18) vorgesehen ist.

3. Gurtaufroller nach Anspruch 2, dadurch gekennzeichnet, daß die Verdrehung des Stellteils (18) relativ zu dem Steuerteil (34) durch einen pyrotechnischen Antrieb (22) erfolgt.

4. Gurtaufroller nach Anspruch 2 oder 3, dadurch gekennzeichnet, daß an dem Stellteil (18) oder dem Umlenkelement (32) eine Steuerfläche (28) und an dem Umlenkelement (32) bzw. dem Stellteil (18) ein Kurvenfolger (30) angeordnet ist, der eine radiale Komponente der Steuerfläche (28) in eine Verstellbewegung des Umlenkelements (32) umsetzt.

5. Gurtaufroller nach einem der Ansprüche 2 bis 4, dadurch gekennzeichnet, daß das Umlenkelement (32) schwenkbar an dem Steuerteil (34) gelagert ist.

6. Gurtaufroller nach einem der Ansprüche 2 bis 5, dadurch gekennzeichnet, daß am Umfang des Stellteils (18) eine Antriebsverzahnung (20) angebracht ist, in die ein Antriebsteil einsteuerbar ist, das dem Stellteil (18) eine Zwangsdrehung relativ zu dem Steuerteil (34) aufgibt.

7. Gurtaufroller nach Anspruch 6, dadurch gekennzeichnet, daß das Antriebsteil durch ein verschwenkbares Ritzelsegment (42) gebildet ist.

8. Gurtaufroller nach einem der Ansprüche 1 bis 7, dadurch gekennzeichnet, daß das Steuerteil (34) eine Steuerverzahnung aufweist, in die eine am Rahmen (10) gelagerte Sperrklinke fahrzeugsensitiv einsteuerbar ist.

9. Gurtaufroller nach einem der Ansprüche 1 bis 8, dadurch gekennzeichnet, daß der Blockiermechanismus wenigstens eine an dem Steuerteil (34) schwenkbar gelagerte Blockierklinke (50, 52) aufweist, die auf Drehbeschleunigung ansprechend in eine Blockierverzahnung (54) am Rahmen (10) eingesteuert wird.

10. Gurtaufroller mit einer in einem Rahmen (10) drehbar gelagerten Gurtspule (12) und einem integrierten Kraftbegrenzer, der ein mit einem Ende an der Gurtspule (12) angeschlossenes Metallband (36) und ein relativ zur Gurtspule (12) drehbar gelagertes Steuerteil (34) aufweist, das durch einen Blockiermechanismus am Rahmen (10) drehfest blockierbar ist und an dem das andere Ende des Metallbandes (36) angeschlossen ist, wobei das Metallband (36) bei Überschreitung einer bestimmten Zugspannung im Gurtband durch eine mit dem Steuerteil (34) drehfeste Schikane gezogen und dabei plastisch deformiert wird, dadurch gekennzeichnet, daß durch Relativdrehung zwischen Steuerteil (34) und Gurtspule (12) ein Schaltelement aktiviert wird, das im Anschluß an eine durch plastische Deformierung des Metallbandes (36) erfolgte Kraftbegrenzung einen Sperrmechanismus aktiviert, der weiteren Gurtbandabzug von der Gurtspule (12) verhindert.

11. Gurtaufroller nach Anspruch 10, dadurch gekennzeichnet, daß das Schaltelement ein bezüglich der Gurtspule (12) axial verschiebbares Teil (62) ist, dessen Verschiebung durch eine zwischen Steuerteil (34) und Gurtspule (12) gebildete Steuerkurve/Kurvenfolger-Kombination bestimmt wird.

12. Gurtaufroller nach einem der Ansprüche 10 und 11, dadurch gekennzeichnet, daß der Sperrmechanismus durch eine Gurtband-Klemme (14) gebildet ist.
